# EUROPÄISCHE PATENTSCHRIFT

(11) **EP 0 521 445 B1**
(45) Veröffentlichungstag und Bekanntmachung des Hinweises auf die Patenterteilung: **06.09.1995**
(21) Anmeldenummer: 92111026.8
(22) Anmeldetag: 30.06.1992
(51) Int. Cl.: H02G 15/18, H02G 15/013

(54) **Wärmeschutzelement für Kabel im Eingangsbereich von wärmeschrumpfbaren Kabelmuffen**
Heat protection element for cables at the entrance area of heatshrinkable cable sleeves
Elément de protection contre la chaleur pour câbles dans la zone d'entrée de manchons de câble thermorétractables

(30) Priorität: 02.07.1991 DE 4121864
(43) Veröffentlichungstag der Anmeldung: 07.01.1993
(73) Patentinhaber: RXS Schrumpftechnik-Garnituren GmbH, D-58093 Hagen (DE)
(72) Erfinder: Schulte, Wolfgang, Dipl.-Ing., W-5800 Hagen 1 (DE); Meltsch, Hans-Jürgen, Dipl.-Ing., W-5840 Schwerte (DE)
(74) Vertreter: Fuchs, Franz-Josef, Dr.-Ing.

(56) Entgegenhaltungen:
- EP-A- 0 286 340
- DE-A- 2 949 165
- DE-A- 3 521 369
- DE-A- 3 622 583
- DE-A- 3 934 426
- DE-U- 8 125 727
- FR-A- 2 627 026

## Beschreibung

Die Erfindung betrifft ein Warmeschutzelement aus einer Kunststoffolie für Kabel im Eingangsbereich von wärmeschrumpfbaren Kabelmuffen mit einer Beschichtung aus Dichtmittel und mit Durchgriffen für das Dichtmittel.

Durch das deutsche Gebrauchsmuster 81 25 727 ist eine Hitzeschutzfolienbahn zum Einsatz bei Kabeleingängen in Kabelmuffen mit einer Hülle aus wenigstens bereichsweise schrumpffähigem Kunststoffmaterial bekannt. Dort wird eine temperaturbeständige Trägerfolie verwendet, die beidseitig mit Heißschmelzkleber beschichtet ist.

Aus der französischen Patentschrift FR-A-2 627 026 ist ein Dichtungsband aus wärmeschrumpfbarem Material bekannt, das in Schichten auf die Dichtungsstelle eines Kabels aufgewickelt wird bis die benötigte Packungsdicke erreicht ist.

In der deutschen Offenlegungsschrift DE-A-36 22 583 wird ein schrumpfbares Kunststoffband mit einem Fixierelement zum Umwickeln von Gegenständen beschrieben.

In der deutschen Offenlegungsschrift DE-A-2 949 165 handelt es sich um Dichtungseinlagen aus einem durch Wärmeeinwirkung aktivierbarem Kunststoffmaterial mit Formgedächtnis, bei denen durch Volumenveränderung infolge der Wärmeeinwirkung die Dichtungswirkung eintritt.

Aus der deutschen Offenlegungsschrift DE-A-3 934 426 ist ein wärmefestes Band bekannt, das wendelförmig auf den Eintrittsbereich eines Kabels aufgewickelt wird, das während der Wärmeeinwirkung nicht reagiert.

Weiterhin ist aus der deutschen Offenlegungsschrift 35 21 369 eine Vorrichtung als Hitzeschutzfolie zum Einsatz bei Kabeleingängen in Kabelmuffen bekannt. Auch hier wird eine temperaturbeständige Trägerfolie verwendet, die beidseitig Heißschmelzkleberbeschichtungen aufweist. Diese Hitzeschutzfolie ist mit rasterförmig verteilten Ausnehmungen versehen, durch welche die Aktivierung der dem Kabel zugewandten Kleberschicht sichergestellt wird.

Aufgabe vorliegender Erfindung ist, ein Wärmeschutzelement für Kabel zu schaffen, das nicht nur einen Schutz des Kabelmantels gegenüber Wärmeeinwirkung sondern auch eine sichere Abdichtung des Ringspalts zwischen dem Kabel und der Kabelmuffe gewährleistet, wobei insbesondere die Abdichtung in diesem Ringspalt verbessert werden soll. Die gestellte Aufgabe wird gemäß der Erfindung mit einem Wärmeschutzelement der eingangs erläuterten Art dadurch gelöst, daß die Kunststoffolie als Band ausgebildet, wärmeschrumpfbar und rohrförmig vorgeformt ist.

Der Vorteil bei der Verwendung eines Wärmeschutzelementes gemäß der Erfindung liegt darin, daß die verwendete Kunststoffolie wärmeschrumpfbar ist, so daß sie bei Einwirkung von Wärme nicht nur als ausreichender Wärmeschutz anzusehen ist, sondern daß auch durch die Selbstschrumpfung zusätzlich der Sitz und damit die Abdichtung des Ringspaltes zwischen dem Wärmeschutzelement und dem Kabelmantel verbessert wird. Dies ist beim Stand der Technik nicht gegeben und die Abdichtung kann unter Umständen durch Abfließen des Heißschmelzklebers fehlerhaft werden. Bei dem Wärmeschutzelement gemäß der Erfindung wird dies verhindert.

Das Wärmeschutzelement gemäß der Erfindung besteht vorzugsweise aus einem Polyolefin und wird durch Extrusion hergestellt. Dieses Extrudat wird, was jedoch nicht zwingend ist, durch energiereiche Bestrahlung oder auf chemischem Wege nach an sich bekannter Weise vernetzt. Um diesem unvernetzten oder vernetzten Vorprodukt wärmeschrumpfende Eigenschaften zu verleihen, wird es anschließend bei Temperaturen oberhalb des Kristallitschmelzpunktes einem ebenfalls an sich bekannten Reckverfahren unterzogen. Damit ist das Wärmeschutzelement im Prinzip fertiggestellt; denn es kann bereits in dieser Form eingesetzt werden. Im allgemeinen wird es jedoch mit einem Dichtmittel belegt, wodurch die Dichteigenschaften verbessert werden. Diese Belegung bzw. Beschichtung kann vollständig oder auch nur partiell erfolgen, wobei hierfür vorzugsweise an sich bekannte Heißschmelzkleber auf Polyamidbasis verwendet werden, deren Erweichungspunkte zwischen 60 und 90° C oder zwischen 80 und 120° C liegen. Es können jedoch auch andere Ethylen-Copolymere mit Vinylacetat (EVA) oder Dichtstoffe aus Butylkombinationen verwendet werden. Wichtig ist dabei, daß sie zum Kabelmantel gute Klebeeigenschaften besitzen, wobei das jeweilige Viskositätsverhalten der Dichtmittel bei deren Auswahl entscheidend ist. Je nach Bedarf werden auch Maßnahmen getroffen, durch die der direkte Kontakt des Kabelmantels der schrumpfenden Umhüllung auf das Kabel vermieden oder auch gewährleistet wird.

Als Material für die Kunststoffolie, die als die eigentliche Wärmeschutzfolie anzusehen ist, wird insbesondere Polyethylen verwendet, welches vorzugsweise einen niedrigen Kristallitschmelzpunkt aufweist. Außerdem ist es möglich das Band in zwei Schichten aus unterschiedlichem Material z.B. mit niedrigem bzw. hohem Kristallitschmelzpunkt aufzubauen. Als Material für die Kunststoffolie eignet sich auch Polyethylenacrylcopolymer (PEAC).

Die Kunststoffolie gemäß der Erfindung ist zweckmäßigerweise als Band ausgebildet. Die Wanddicke dieses Bandes kann über die Breite hinweg gleichmäßig oder auch unterschiedlich sein, wobei es zweckmäßigerweise im Dichtungsbereich dünn und im übrigen Bereich, besonders im Stützbereich dicker ist. Die Kunststoffolie kann auch aus mehreren Schichten bestehen, wobei sie dann in Coextrusion hergestellt wird. Zweckmäßigerweise wird bei der Coextrusion eine Materialkombination "hart/weich" (hoher/niedriger Kristallitschmelzpunkt oder starke/schwache Vernetzung bei gleicher Bestrahlungs-Dosis) oder "hart/weich/hart" benutzt. Dabei werden zwei Schichten über die gesamte Breite verwendet, wobei die äußere hart und die innere weich ist.

Die Form der bandförmgien Kunststoffolien kann werksseitig bereits vorgeformt sein, zum Beispiel rund oder spiralförmig, wobei sie dann überlappend oder auf Stoß sitzend aufgebracht werden kann. Außerdem kann die Kunststoffolie auch mit Durchgriffen in Form von Löchern oder Schlitzen versehen werden. Bei ungeschnittenen Kabeln ist die Kunststoffolie auch in Form eines Schlauches, das heißt also als Schrumpfschlauch, möglich.

Die Reckung der Kunststoffolien, die aus zwei Schichten bestehen, kann in einem Vorgang erfolgen. Doch ist auch möglich, bei geeigneter Materialkombination zu erreichen, daß die Schrumpfkräfte der beiden Materialien unterschiedlich sind, obwohl beim Vernetzen die gleiche Bestrahlungs-Dosis eingesetzt wurde.

Die gleiche Wirkung kann auch erzielt werden, wenn zwei Folien, die unterschiedlich bei der Extrusion verstreckt werden, zusammengebracht werden, wodurch sich das Eindrehverhalten der Kunststoffolie ergibt. Dabei beträgt der unterschiedliche Reckungsgrad 1 bis 100 % oder mehr, vorzugsweise jedoch 20 bis 30 %.

Das Dichtmittel kann einseitig oder beidseitig auf die Kunststoffolie aufgebracht werden, wobei auch unterschiedliche Kombinationen von Dichtmitteln verwendet werden können. Die Dicke des Dichtmittelauftrages auf dem Element kann ebenfalls unterschiedlich sein.

Die Oberfläche der Kunststoffolien kann vor dem Aufbringen der Dichtmittel oberflächenaktiviert werden (z.B. mit Hilfe von Corona-Entladung). Außerdem kann die unvernetzte Kunststoffolie auch zum Aufdicken des Kabelmantels dienen, wenn der Durchmesser zu vergrößern ist. Das Material für die Kunststoffolie und für den Kabelmantel kann gleichartig sein. Es kann jedoch auch einen geringeren Erweichungspunkt haben, so daß eine Verschmelzung erfolgt, wodurch die Wanddicke des Kabelmantels und somit die Widerstandsfähigkeit erhöht wird.

Bei Verwendung von unterschiedlichen Dichtmittelkombinationen können zum Beispiel Dichtmittel mit verschiedenen Aktivierungstemperaturen eingesetzt werden.

Die Erfindung wird nun anhand von Ausführungsbeispielen in vier Figuren näher erläutert.
- Figur 1: zeigt den Einsatzbereich des Wärmeschutzelementes.
- Figur 2: zeigt ein Ausführungsbeispiel des Wärmeschutzelementes.
- Figur 3: zeigt eine rohrförmige Ausbildung des Wärmeschutzelementes.
- Figur 4: zeigt eine spiralförmige Ausbildung des Wärmeschutzelementes.

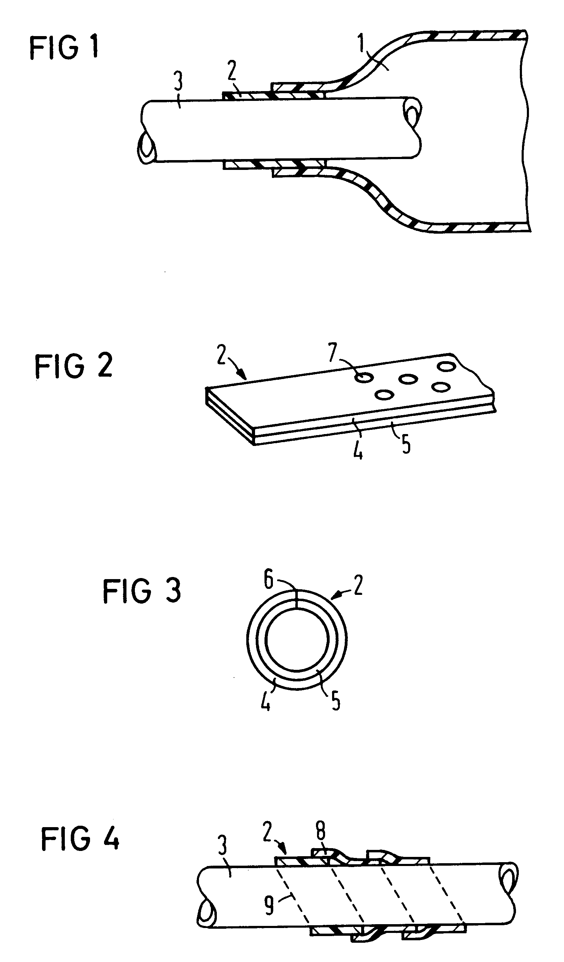

Die Figur 1 zeigt den Eingangsbereich einer schrumpfbaren Kabelmuffe 1, die durch Einwirkung von Wärme auf das Kabel 3 aufgeschrumpft wird. Dabei kann es am Randbereich der Kabelmuffe zu Wärmeschäden am Kabelmantel kommen, wenn nicht Vorsichtsmaßnahmen getroffen werden. Dies erfolgt durch den Einsatz des Wärmeschutzelementes 2 gemäß der Erfindung. Das Wärmeschutzelement 2 ist selbst wärmeschrumpfbar und wird entweder auf den Kabelmantel allein (ohne Schrumpfmanschette) oder gemeinsam mit der Schrumpfmanschette auf den Kabelmantel 3 aufgeschrumpft. Dadurch ergeben sich ausgezeichnete Dichtungsverhältnisse im Ringspalt zwischen dem Kabel 3 und dem Wärmeschutzelement 2. Bei der Schrumpfung der Kabelmuffe 1 ist das Kabel 3 durch das überstehend angeordnete Wärmeschutzelement gegen Wärmeeinwirkung geschützt.

Die Figur 2 zeigt den Aufbau des Wärmeschutzelementes 2, das aus einer wärmeschrumpfbaren Kunststoffolie 4 und einer Beschichtung aus einem Dichtmittel 5 besteht. Die Kunststoffolie 4 kann zusätzlich mit Durchgriffen 7 in Form von Löchern oder Schlitzen versehen sein, um den Durchgriff der Wärmeeinwirkung auf das darunterliegende Dichtmittel zu ermöglichen und dadurch das Aufschmelzen zu verbessern.

Die Figur 3 zeigt das Wärmeschutzelement 2 gemäß der Erfindung, das rohrförmig vorgeformt ist und auf Stoß 6 zusammengebracht ist, so daß es sich über ungeschnittene Kabel aufbringen läßt. Das Dichtmittel 5 ist innen, die schrumpfbare Kunststoffolie 4 außen angeordnet.

Die Figur 4 zeigt eine Anordnung, bei der das Wärmeschutzelement 2 in Spiralform 9 auf das Kabel 3 aufgewickelt ist. Dabei sind die Kanten der Kunststoffolie 4 überlappend angeordnet.

## Patentansprüche

1. Wärmeschutzelement (2) aus einer Kunststoffolie für Kabel (3) im Eingangsbereich von wärmeschrumpfbaren Kabelmuffen (1) mit einer Beschichtung aus Dichtmittel und mit Durchgriffen (7) für das Dichtmittel (5),
**dadurch gekennzeichnet,**
daß die Kunststoffolie (4) als Band ausgebildet, wärmeschrumpfbar und rohrförmig vorgeformt ist.

2. Wärmeschutzelement nach Anspruch 1,
**dadurch gekennzeichnet,**
daß das Dichtmittel (5) ein an sich bekannter Heißschmelzkleber vorzugsweise auf Polyamidbasis, mit einem Erweichungspunkt zwischen 60 und 120° C ist.

3. Wärmeschutzelement nach Anspruch 1,
**dadurch gekennzeichnet,**
daß das Dichtmittel (5) ein Kunststoffmaterial auf der Basis von Ethylen-Copolymeren mit Vinylacetat (EVA-Basis) ist.

4. Wärmeschutzelement nach Anspruch 1,
**dadurch gekennzeichnet,**
daß das Dichtmittel (5) aus Butylkombinationen besteht.

5. Wärmeschutzelement nach einem der vorhergehenden Ansprüche,
**dadurch gekennzeichnet,**
daß die Kunststoffolie (4) aus Polyethylen besteht.

6. Wärmeschutzelement nach einem der Ansprüche 1 bis 4,
**dadurch gekennzeichnet,**
daß die Kunststoffolie (4) aus Polyethylenacrylcopolymerisat (PEAC) besteht.

7. Wärmeschutzelement nach einem der vorhergehenden Ansprüche,
**dadurch gekennzeichnet,**
daß das Material der Kunststoffolie (4) vernetzt ist.

8. Wärmeschutzelement nach Anspruch 7,
**dadurch gekennzeichnet,**
daß das Material durch Bestrahlung vernetzt ist.

9. Wärmeschutzelement nach Anspruch 7,
**dadurch gekennzeichnet,**
daß das Material chemisch vernetzt ist.

10. Wärmeschutzelement nach einem der vorhergehenden Ansprüche,
**dadurch gekennzeichnet,**
daß die Kunststoffolie (4) gereckt ist.

11. Wärmeschutzelement nach einem der Ansprüche 1 bis 9,
**dadurch gekennzeichnet,**
daß die Kunststoffolie (4) ungereckt ist.

12. Wärmeschutzelement nach einem der Ansprüche 1 bis 11,
**dadurch gekennzeichnet,**
daß die Kunststoffolie (4) als Schlauch ausgebildet ist.

13. Wärmeschutzelement nach einem der vorhergehenden Ansprüche,
**dadurch gekennzeichnet,**
daß die Dicke des Bandes in der Breite unterschiedlich ist, wobei die Dicke im Dichtbereich dünner ist als im Stützbereich.

14. Wärmeschutzelement nach einem der vorhergehenden Ansprüche,
**dadurch gekennzeichnet,**
daß es (2) durch Coextrusion von Kunststoffolie (4) und Dichtmittel (5) hergestellt ist.

15. Wärmeschutzelement nach Anspruch 14,
**dadurch gekennzeichnet,**
daß die äußere der beiden coextrudierten Schichten stark und die innere Schicht schwach bei gleicher Bestrahlungsdosis vernetzt ist.

16. Wärmeschutzelement nach einem der vorhergehenden Ansprüche,
**dadurch gekennzeichnet,**
daß es (2) spiralförmig aus dem Band vorgeformt ist.

17. Wärmeschutzelement nach einem der vorhergehenden Ansprüche,
**dadurch gekennzeichnet,**
daß zwei Kunststoffolien (4) übereinander zusammengebracht sind.

18. Wärmeschutzelement nach Anspruch 17,
**dadurch gekennzeichnet,**
daß die Kunststoffolien (4) unterschiedlich im Verhältnis 1 bis 100 %, vorzugsweise 20 bis 30 %, gereckt sind, wobei die äußere jeweils stark und die innere schwach vernetzt sind.

19. Wärmeschutzelement nach einem der vorhergehenden Ansprüche,
**dadurch gekennzeichnet,**
daß das Dichtmittel (5) einseitig auf der Kunststoffolie aufgebracht ist.

20. Wärmeschutzelement nach einem der Ansprüche 1 bis 18,
**dadurch gekennzeichnet,**
daß das Dichtmittel beidseitig auf der Kunststoffolie aufgebracht ist.

21. Wärmeschutzelement nach einem der vorhergehenden Ansprüche,
**dadurch gekennzeichnet,**
daß unterschiedliche Dichtmittelkombinationen, vorzugsweise mit unterschiedlichen Aktivierungstemperaturen, aufgebracht sind.

22. Wärmeschutzelement nach einem der vorhergehenden Ansprüche,
**dadurch gekennzeichnet,**
daß das Dichtmittel (5) in unterschiedlicher Stärke aufgebracht ist.

23. Wärmeschutzelement nach einem der vorhergehenden Ansprüche,
**dadurch gekennzeichnet,**
daß es überlappend aufgebracht ist.

24. Wärmeschutzelement nach einem der Ansprüche 1 bis 22,
**dadurch gekennzeichnet,**
daß es auf Stoß aneinandergefügt ist.

## Claims

1. Heat protection element (2), comprising a plastic film, for cables (3) at the entrance area of heat-shrinkable cable sleeves (1), having a coating of sealant and having passages (7) for the sealant (5), characterized in that the plastic film (4) is designed as a strip, is heat-shrinkable and is tubularly preformed.

2. Heat protection element according to Claim 1, characterized in that the sealant (5) is a hot-melt adhesive known per se, preferably based on polyamide, having a softening point between 60 and 120° C.

3. Heat protection element according to Claim 1, characterized in that the sealant (5) is a polymer material based on ethylene copolymers with vinyl acetate (EVA base).

4. Heat protection element according to Claim 1, characterized in that the sealant (5) consists of butyl combinations.

5. Heat protection element according to one of the preceding claims, characterized in that the plastic film (4) consists of polyethylene.

6. Heat protection element according to one of Claims 1 to 4, characterized in that the plastic film (4) consists of polyethylene-acrylate copolymer (PEAC).

7. Heat protection element according to one of the preceding claims, characterized in that the material of the plastic film (4) is crosslinked.

8. Heat protection element according to Claim 7, characterized in that the material is crosslinked by irradiation.

9. Heat protection element according to Claim 7, characterized in that the material is chemically crosslinked.

10. Heat protection element according to one of the preceding claims, characterized in that the plastic film (4) is stretched.

11. Heat protection element according to one of Claims 1 to 9, characterized in that the plastic film (4) is unstretched.

12. Heat protection element according to one of Claims 1 to 11, characterized in that the plastic film (4) is designed as a tube.

13. Heat protection element according to one of the preceding claims, characterized in that the thickness of the strip varies in width, the thickness being thinner in the sealing region than in the supporting region.

14. Heat protection element according to one of the preceding claims, characterized in that it (2) is produced by coextrusion of plastic film (4) and sealant (5).

15. Heat protection element according to Claim 14, characterized in that the outer of the two coextruded layers is strongly crosslinked and the inner layer is weakly crosslinked with the same irradiation dose.

16. Heat protection element according to one of the preceding claims, characterized in that it (2) is spirally preformed from the strip.

17. Heat protection element according to one of the preceding claims, characterized in that two plastic films (4) are brought together one over the other.

18. Heat protection element according to Claim 17, characterized in that the plastic films (4) are stretched differently at a ratio of 1 to 100 %, preferably 20 to 30 %, the outer film in each case being crosslinked strongly and the inner film being crosslinked weakly.

19. Heat protection element according to one of the preceding claims, characterized in that the sealant (5) is applied on one side of the plastic film.

20. Heat protection element according to one of Claims 1 to 18, characterized in that the sealant is applied on both sides of the plastic film.

21. Heat protection element according to one of the preceding claims, characterized in that different sealant combinations, preferably having different activation temperatures, are applied.

22. Heat protection element according to one of the preceding claims, characterized in that the sealant (5) is applied in varying thicknesses.

23. Heat protection element according to one of the preceding claims, characterized in that it is applied in an overlapping manner.

24. Heat protection element according to one of Claims 1 to 22, characterized in that it is joined such that it butts together.

## Revendications

1. Elément (2) en une feuille en matière plastique de protection contre la chaleur d'un câble (3) dans la zone d'entrée de manchons (1) de câble thermorétractables ayant un revêtement en un agent d'étanchéité et des trous (7) de passage de l'agent (5) d'étanchéité,
caractérisé en ce que
la feuille (4) en matière plastique a la forme d'une bande, est thermorétractable et est préformée en cylindre.

2. Elément de protection contre la chaleur selon la revendication 1, caractérisé en ce que l'agent (5) d'étanchéité est une colle fusible à chaud connue en soi, de préférence à base de polyamide, ayant un point de ramollissement compris entre 60 et 120°C.

3. Elément de protection contre la chaleur selon la revendication 1, caractérisé en ce que l'agent (5) d'étanchéité est une matière plastique à base de copolymères d'éthylène comprenant de l'acétate de vinyle (à base d'EVA).

4. Elément de protection contre la chaleur selon la revendication 1, caractérisé en ce que l'agent (5) d'étanchéité est en associations de butyle.

5. Elément de protection contre la chaleur selon l'une quelconque des revendications précédentes, caractérisé en ce que la feuille (4) de matière plastique est en polyéthylène.

6. Elément de protection contre la chaleur selon l'une des revendications 1 à 4, caractérisé en ce que la feuille (4) en matière plastique est en copolymère de polyéthylène et d'acrylique (PEAC).

7. Elément de protection contre la chaleur selon l'une quelconque des revendications précédentes, caractérisé en ce que la matière de la feuille (4) en matière plastique est réticulée.

8. Elément de protection contre la chaleur selon la revendication 7, caractérisé en ce que la matière de la feuille (4) en matière plastique est réticulée par exposition à un rayonnement.

9. Elément de protection contre la chaleur selon la revendication 7, caractérisé en ce que la matière de la feuille est réticulée chimiquement.

10. Elément de protection contre la chaleur selon l'une quelconque des revendications précédentes, caractérisé en ce que la feuille (4) en matière plastique est étirée.

11. Elément de protection contre la chaleur selon l'une des revendications 1 à 9, caractérisé en ce la feuille (4) en matière plastique n'est pas étirée.

12. Elément de protection contre la chaleur selon l'une des revendications 1 à 11, caractérisé en ce la feuille (4) en matière plastique a la forme d'un tube souple.

13. Elément de protection contre la chaleur selon l'une quelconque des revendications précédentes, caractérisé en ce que l'épaisseur de la bande varie dans sa longueur, l'épaisseur dans la zone étanche étant plus mince que celle de la zone d'appui.

14. Elément de protection contre la chaleur selon l'une quelconque des revendications précédentes, caractérisé en ce que il (2) est fabriqué par coextrusion de la feuille (4) en matière plastique et de l'agent (5) d'étanchéité.

15. Elément de protection contre la chaleur selon la revendication 14, caractérisé en ce que l'extérieur des deux couches coextrudées est réticulée de manière forte et la couche intérieure est réticulée de manière faible par une dose de rayonnement identique.

16. Elément de protection contre la chaleur selon l'une quelconque des revendications précédentes, caractérisé en ce que cet élément (2) de protection est préformé en spirale dans la bande.

17. Elément de protection contre la chaleur selon l'une quelconque des revendications précédentes, caractérisé en ce que deux feuilles (4) en matière plastique sont assemblées l'une sur l'autre.

18. Elément de protection contre la chaleur selon la revendication 17, caractérisé en ce que les feuilles (4) en matière plastique sont étirées différemment selon un rapport de 1 à 100 %, de préférence de 20 à 30 %, les couches extérieures étant réticulées fortement et les couches intérieures faiblement.

19. Elément de protection contre la chaleur selon l'une quelconque des revendications précédentes, caractérisé en ce que l'agent (5) d'étanchéité est appliqué sur une seule face de la feuille de matière plastique.

20. Elément de protection contre la chaleur selon l'une des revendications 1 à 18, caractérisé en ce que l'agent (5) d'étanchéité est appliqué aux deux faces de la feuille en matière plastique.

21. Elément de protection contre la chaleur selon l'une quelconque des revendications précédentes, caractérisé en ce que il est appliqué des combinaisons d'agents (5) d'étanchéité différents, ayant de préférence des températures d'activation différentes.

22. Elément de protection contre la chaleur selon l'une quelconque des revendications précédentes, caractérisé en ce que l'agent (5) d'étanchéité est appliqué en des épaisseurs différentes.

23. Elément de protection contre la chaleur selon l'une quelconque des revendications précédentes, caractérisé en ce que il est appliqué à chevauchement.

24. Elément de protection contre la chaleur selon l'une des revendications 1 à 22, caractérisé en ce que il est monté bout à bout.
